# EUROPÄISCHE PATENTSCHRIFT

(11) **EP 2 096 843 B1**
(45) Veröffentlichungstag und Bekanntmachung des Hinweises auf die Patenterteilung: **14.06.2023**
(21) Anmeldenummer: 09153447.9
(22) Anmeldetag: 23.02.2009
(51) Int. Cl.: H04M 1/7243, H04M 1/72433

(54) **Verwaltungseinheit und Verfahren zur Handhabung von Multimedia-Nachrichten auf einem mobilen Endgerät**
Method and system for handling multimedia messages on a mobile terminal
Unité de gestion et procédé de manipulation d'informations multimédia sur un terminal mobile

(30) Priorität: 29.02.2008 DE 102008011812
(43) Veröffentlichungstag der Anmeldung: 02.09.2009
(73) Patentinhaber: Vodafone GmbH, 40549 Düsseldorf (DE)
(72) Erfinder: Schlich, Anja, 56745 Rieden (DE); Lasinski, Gerald, 40547 Düsseldorf (DE)
(74) Vertreter: Müller, Thomas

(56) Entgegenhaltungen:
- EP-A1- 1 432 219
- WO-A1-2005/120031

## Beschreibung

Die vorliegende Erfindung betrifft ein Verfahren und eine Verwaltungseinheit für ein mobiles Endgerät eines Kommunikationsnetzes zur Handhabung von Multimedia-Nachrichten auf dem mobilen Endgerät.

Heutzutage wird bei Mobiltelefonen die Funktion des Anrufbeantworters als vollständig server-basierter Dienst angeboten. Hierbei werden Sprachnachrichten auf einem Zentralserver hinterlegt und gespeichert. Die Sprachnachrichten müssen dabei von dem Mobiltelefon aus von dem Server abgefragt werden. Zudem ist bei diesen bekannten Anrufbeantworter-Diensten nachteilig, dass die Sprachnachrichten für den Nutzer des Mobiltelefons nicht unmittelbar zur Verfügung stehen. Ein Durchsuchen der Nachrichten kann nur durch aufeinander folgendes Abspielen der Nachrichten vom Server erfolgen. Weiterhin wird bei Anrufbeantworter-Diensten die Telefonnummer des Anrufers lediglich angesagt. Der Nutzer, das heißt der Angerufene, muss sich diese Telfonnummer daher merken oder notieren, um einen möglichen Bezug zu einem Bekannten oder einem anderen Kontakt des Nutzers herstellen zu können. Zudem kann eine Ruckrufoption von den Betreibern des Kommunikationsnetzwerkes nur mittels kostenintensiver Zwischenschaltungsdienste bereitgestellt werden.

Um diese Probleme zu adressieren sind Lösungen vorgeschlagen worden, bei denen Sprachnachrichten mittels eines Multimedia Messaging Services (MMS) an das Endgerät des Angerufenen übermittelt werden. Eine solche Übermittlung ist beispielsweise in der EP 1 613 045 A1 beschrieben. Hierbei wird die Sprachnachricht in eine Multimedia Sprachnachricht mit Nicht-Sprachkomponenten umgewandelt und an das Endgerät des Angerufenen übermittelt. Die Übermittlung erfolgt bei der vorgeschlagenen Lösung mittels Benachrichtigung des Angerufenen durch eine Short Messaging Service (SMS) Nachricht aufgrund derer der Angerufene die MMS-Nachricht von einer Zentralstelle abrufen kann.

Obwohl durch die vorgeschlagene Lösung die Verfügbarkeit der hinterlassenen Sprachnachrichten auf dem Endgerät des Angerufenen gewährleistet werden kann, weist diese Lösung aber weiterhin einige Nachteile für den Angerufenen auf. Insbesondere wird die MMS-Nachricht an dem Endgerät des Angerufenen nicht unmittelbar als eine MMS-Nachricht, die eine Anrufbeantworternachricht enthält erkannt. Dementsprechend wird die herunter geladene MMS-Nachricht entsprechend den Einstellungen des Endgerätes gehandhabt und die Nachricht insbesondere mittels einer auf dem Endgerät von Hersteller vorgesehenen Abspieleinheit wiedergegeben. Die Abspieleinheit muss in der Regel vor dem Abspielen der Nachricht von dem Nutzer aktiviert werden. Zudem ist die Abspieleinheit in der Regel in so genannten MMS-Clients auf dem Endgerät vorgesehen, wobei die Umsetzungen der MMS Clients auf unterschiedlichen Endgeräten unterschiedlich sind. Diese MMS-Clients sind in der Regel vorgesehen, um beispielsweise MMS Nachrichten zu erstellen, zu versenden und zu empfangen. Die in solchen MMS-Clients vorgesehenen Abspieleinheiten für Sprachnachrichten oder andere Audio- und Videonachrichten ist daher rudimentär. Insbesondere sind in der Abspieleinheit in der Regel nur Funktionalitäten vorgesehen, die das Abspielen einer Nachricht starten oder stoppen.

Ein weiteres Verfahren für die Übermittlung von Sprachnachrichten an ein mobiles Endgerät ist beispielsweise in der EP 1 432 219 A1 offenbart. Bei diesem Verfahren wird einem Nutzer die Verfügbarkeit einer neuen Sprachnachricht zum Downloaden mittels einer Nachricht angezeigt. Der Nutzer kann anschließend die Sprachnachricht auf sein mobiles Endgerät herunterladen. Alternativ kann die Sprachnachricht mit Anrufparametern automatisch auf das drahtlose Endgerät heruntergeladen werden. Die Wiedergabe der Sprachnachricht erfolgt beispielsweise durch einen MMS-Client. Somit sind auch bei dem in der EP 1 432 219 A1 offenbarten Verfahren die oben genannten Nachteile gegeben.

Aufgabe der vorliegenden Erfindung ist es daher eine Verfahren und eine Verwaltungseinheit für ein mobiles Endgerät zu schaffen, mit der Multimedia-Nachrichten einfacher und nutzergerechter verarbeitet werden können.

Gemäß einem ersten Aspekt wird die Aufgabe gelöst durch ein Verfahren zur Handhabung von Multimedia-Nachrichten auf einem mobilen Endgerät eines mobilen Kommunikationsnetzwerkes. Das Verfahren weist erfindungsgemäß die Merkmale des unabhängigen Patentanspruchs 1 auf.

Als Multimedia-Nachrichten werden im Sinne der Erfindung Nachrichten bezeichnet, die multimedialen Inhalt besitzen. Eine Multimedia-Nachricht oder Multimedia Message (MM) kann Texte, Dokumente, Bilder, Videosequenzen und / oder Audiosequenzen enthalten. Vorzugsweise wird als Multimedia-Nachricht eine Nachricht bezeichnet, die mittels des Multimedia Messaging Services (MMS) übermittelt wird. Das mobile Endgerät stellt vorzugsweise ein Mobiltelefon oder einen PDA dar. Hierbei ist das mobile Endgerät zum Empfang und der Verarbeitung von MMS-Nachrichten ausgelegt. Besonders bevorzugt werden im Sinne der Erfindung Multimedia-Nachrichten als Multimedia-Sprachnachricht erkannt, die eine Anrufbeantworternachricht enthalten beziehungsweise von einem Dienste-Server eines Anrufbeantworter-Dienstes stammen.

Die Überprüfung der Multimedia-Nachricht erfolgt in einer Überprüfungseinheit, die in der Verwaltungseinheit mit Abspieleinheit vorgesehen beziehungsweise implementiert ist. Die Verwaltungseinheit wird im Folgenden auch als Client bezeichnet. Multimedia-Nachrichten, die nicht als Multimedia-Sprachnachricht erkannt werden, müssen bei dieser Ausführungsform nach der Überprüfung weiteren Einheiten des mobilen Endgerätes zur entsprechenden Bearbeitung zugeleitet werden. Bei dieser Alternative ist es aber vorteilhaft, dass die weitere Behandlung der Multimedia-Nachricht in dem mobilen Endgerät gegebenenfalls unter Berücksichtung von Informationen erfolgen kann, die in der Verwaltungseinheit hinterlegt sind. Diese Informationen können beispielsweise Präferenzen und Einstellungen sein, die der Nutzer des mobilen Endgerätes in der Verwaltungseinheit eingestellt und hinterlegt hat.

Die Speichereinheit, in der die als Multimedia-Sprachnachricht erkannte Multimedia-Nachricht hinterlegt wird, kann in der Verwaltungseinheit integriert sein oder die Verwaltungseinheit kann auf diese Speichereinheit zugreifen. Hierbei kann die Speichereinheit ausschließlich zum Speichern von Multimedia-Sprachnachrichten verwendet werden. Alternativ, kann in der Speichereinheit ein Ordner oder eine andere Unterteilung vorgesehen sein, die ausschließlich zum Speichern von Multimedia-Sprachnachricht verwendet wird. Durch das Speichern der Multimedia-Sprachnachricht in der Verwaltungseinheit steht diese dem Nutzer jederzeit zur Verfügung. In der Verwaltungseinheit ist eine Abspieleinheit vorgesehen, die speziell zum Abspielen von Multimedia-Sprachnachricht ausgelegt ist. Indem die als Multimedia-Sprachnachricht erkannte Multimedia-Nachricht in einer Speichereinheit hinterlegt wird, die mit der Verwaltungseinheit verbunden ist, kann sichergestellt werden, dass eine Wiedergabe beziehungsweise ein Abspielen der Multimedia-Sprachnachricht ausschließlich über die in der Verwaltungseinheit vorgesehene Abspieleinheit erfolgt. Zudem kann die Multimedia-Sprachnachricht auch weiteren Anwendungen und Einheiten, die von der Verwaltungseinheit aus gesteuert oder verwaltet werden zugeführt oder zur Verfügung gestellt werden. Schließlich kann durch das Ablegen oder Abspeichern der Multimedia-Sprachnachricht in einer Speichereinheit, die der Verwaltungseinheit zugeordnet ist, eine Aufarbeitung von Informationen, die in der Multimedia-Sprachnachricht enthalten sind erfolgen, wodurch konkrete Angaben zu der Multimedia-Sprachnachricht gemacht werden können.

Vorteil der vorliegenden Erfindung ist es somit, dass im Vergleich zu bekannten Lösungen, Multimedia-Sprachnachrichten auf einem mobilen Endgerät speziell gehandhabt werden können. Hierdurch eröffnen sich für den Nutzer des Endgerätes neue Wahlmöglichkeiten bei der Ausgabe und Handhabung der Multimedia-Sprachnachricht und Multimedia-Sprachnachrichten können für Dienste, wie insbesondere Anrufbeantworter-Dienste vorteilhaft eingesetzt werden.

Die Multimedia-Nachricht wird bezüglich Ihres Inhaltes und/oder Ihrer Herkunft überprüft. Der Inhalt bezüglich dessen die Multimedia-Nachricht bei Empfang auf dem mobilen Endgerät überprüft wird, ist vorzugsweise das Format der Multimedia-Nachricht. Somit wird insbesondere geprüft ob es sich bei der Multimedia-Nachricht um eine Multimedia-Sprachnachricht handelt. Zudem kann aus dem Inhalt der Multimedia-Nachricht, beispielsweise aus einem Eintrag im Header der Multimedia-Nachricht oder durch eine andere Markierung erkannt werden, ob es sich bei der Multimedia-Nachricht um eine Multimedia-Sprachnachricht handelt, die eine Anrufbeantworternachricht beinhaltet. Zusätzlich oder alternativ zu dem Inhalt der empfangenen Multimedia-Nachricht kann die Herkunft der Multimedia-Nachricht überprüft werden. Hierdurch kann beispielsweise bestimmt werden, ob eine Multimedia-Sprachnachricht unmittelbar von einem anderen mobilen Endgerät oder von einer zentralen Verarbeitungseinheit des Kommunikationsnetzes stammt. Letztere kann insbesondere eine Verarbeitungseinheit für Anrufbeantworter-Dienste, die auch als Voice Mail Dienste bezeichnet werden, sein. Entsprechend der erkannten Herkunft können die entsprechenden Multimedia-Sprachnachricht einfach als Multimedia-Sprachnachricht eines Dienste-Servers eines Anrufbeantworterdienstes erkannt werden.

Die Abspieleinheit, die im Folgenden auch als Player bezeichnet wird, der Verwaltungseinheit wird beim Auswählen einer Multimedia-Sprachnachricht in der Speichereinheit aktiviert. Alternativ ist es aber auch möglich, dass beim Aktivieren der Abspieleinheit die Multimedia-Sprachnachricht aufgerufen und abgespielt wird. Indem die bereits als Multimedia-Sprachnachricht erkannte Nachricht einer speziellen Abspieleinheit in der Verwaltungseinheit zur Verfügung gestellt wird, können Funktionen, die für eine gute Wiedergabe von Sprachnachrichten notwendig sind und die in der Abspieleinheit vorgesehen sind, genutzt werden. Bei der Wiedergabe kann ein Anzeigefenster der Abspieleinheit auf dem Display des mobilen Endgerätes geöffnet werden. In diesem Anzeigefenster kann beispielsweise eine Statusleiste angezeigt werden, die die Gesamtdauer der Nachricht und/oder die Restdauer anzeigt. Zudem können Informationen, wie die Nummer oder der Name des Anrufers und/oder Datum und Uhrzeit des Erhaltes der Multimedia-Sprachnachricht oder der Empfangs der ursprünglich aufgezeichneten Anrufbeantworternachricht angezeigt werden.

Gemäß einer Ausführungsform wird die Multimedia-Sprachnachricht über die Verwaltungseinheit einer Weiterleitungseinheit des Endgerätes zur Verfügung gestellt. Somit wird es möglich Multimedia-Sprachnachricht sowohl für den Nutzer des mobilen Endgerätes an dem mobilen Endgerät selber verfügbar zu machen und zudem die Multimedia-Sprachnachricht dem Nutzer auch an anderen Geräten, wie beispielsweise einem PC, und/oder anderen Benutzern zugänglich zu machen. Die Weiterleitung kann beispielsweise per Email oder andere Messaging Services erfolgen.

Vorzugsweise wird die Multimedia-Nachricht durch einen Push-Mechanismus an dem mobilen Endgerät empfangen. Als Push-Mechanismus wird eine Übertragungsmethode bezeichnet, bei der die Übertragung von der Seite ausgeht, von der die Multimedia-Nachricht stammt. Hierdurch ist eine Aktion des Nutzers des mobilen Endgerätes zum Empfang der Nachricht nicht erforderlich. Diese Art der Übermittlung kann bei dem erfindungsgemäßen Verfahren eingesetzt werden, da die an dem mobilen Endgerät empfangenen Multimedia-Nachrichten entsprechend behandelt und verarbeitet werden. Ist eine solche Behandlung und Verarbeitung an dem mobilen Endgerät nicht vorgesehen, kann es zu einer Fehlleitung der Multimedia-Nachrichten auf dem mobilen Endgerät kommen.

Das Erkennen einer Multimedia-Sprachnachricht erfolgt vorzugsweise durch Überprüfen des Vorliegens einer Markierung in der empfangenen Multimedia-Nachricht. Eine solche Markierung kann beispielsweise ein Flag oder Tag sein. Die Markierung kann bei der Übermittlung der Multimedia-Nachricht gesetzt werden. Insbesondere kann die Markierung bei der so genannten Transkription von Multimedia-Nachricht gesetzt werden. Handelt es sich bei der Multimedia-Nachricht um eine Nachricht, die von einer zentralen Verarbeitungsstelle eines Anrufbeantworter-Dienstes stammt, kann die Markierung in der zentralen Verarbeitungsstelle bei der Umwandlung einer Sprachnachricht in eine Multimedia-Sprachnachricht erfolgen. Die Markierung kann beispielsweise in den Header der Multimedia-Sprachnachricht integriert werden. Die Verwendung einer Markierung bietet die Vorteile, dass Multimedia-Sprachnachrichten schnell erkannt werden können. Als Tage kann beispielsweise ein MIME-Tag (Multipurpose Internet Mail Extensions) verwendet werden.

Vorzugsweise werden an dem mobilen Endgerät Informationen zu der Multimedia-Sprachnachricht angezeigt. Die Anzeige der Informationen wird vorzugsweise von der Verwaltungseinheit erzeugt und durch Anzeigevorrichtungen, wie beispielsweise das Display des mobilen Endgerätes realisiert. Durch die Anzeige von Informationen zu der Multimedia-Sprachnachricht wird es dem Nutzer ermöglicht geeignete Maßnahmen zu treffen beziehungsweise die Nachricht entsprechend zu behandeln.

Die Informationen zu der Multimedia-Sprachnachricht, die an dem mobilen Endgerät angezeigt werden, werden vorzugsweise nach dem Empfang der Multimedia-Nachricht geändert. Dies hat den Vorteil, dass die Informationen zum einen immer aktuell gehalten werden können. Zum anderen können zusätzliche Angaben und Daten, die auf dem mobilen Endgerät zur Verfügung stehen, zur Änderung der Informationen verwendet werden. Die Informationen können beispielsweise personalisiert werden.

Die Informationen zu der Multimedia-Sprachnachricht, die an dem mobilen Endgerät angezeigt werden, können gemäß einer Ausführungsform Statusinformationen der Multimedia-Sprachnachricht und/oder Angaben zu dem Absender oder Hersteller der Multimedia-Sprachnachricht, das heißt der Herkunft des Inhalts der Multimedia-Sprachnachricht enthalten. Statusinformationen der Multimedia-Sprachnachricht können beispielsweise angeben, ob es sich um eine neu empfangene Nachricht handelt, ob die Nachricht bereits abgehört wurde, ob die Nachricht gegebenenfalls weitergeleitet wurde und/oder ob auf die Nachricht geantwortet wurde. Die Angaben zur Herkunft des Inhaltes der Multimedia-Sprachnachricht kann insbesondere bei Anrufbeantworternachrichten, eine Angabe zu dem Anrufer sein, der die Nachricht ursprünglich hinterlassen hat. Während die Statusinformationen bezüglich des aktuellen Status der Multimedia-Sprachnachricht vorzugsweise geändert werden, können die Informationen betreffend die Herkunft des Inhaltes nach Empfang der Multimedia-Sprachnachricht an dem mobilen Endgerät geändert werden, um dem Nutzer zusätzliche Angaben zu der Herkunft zur Verfügung zu stellen. Beispielsweise kann die Rufnummer des Anrufers, die in der Multimedia-Sprachnachricht enthalten ist, durch den Namen des Anrufers ersetzt werden. Die Korrelation zwischen der Rufnummer und dem Namen erfolgt hierbei unter Verwendung von Informationen, die auf dem mobilen Endgerät zur Verfügung stehen. Beispielsweise werden Adressbucheinträge oder sonstige Kontaktinformationen hierzu verwendet.

Vorzugsweise wird die empfangene Multimedia-Sprachnachricht beim Auswählen der Nachricht durch den Nutzer des mobilen Endgerätes unmittelbar für eine Abspieleinheit der Verwaltungseinheit zur Verfügung gestellt. Der Nutzer des mobilen Endgerätes muss daher keine separate Anwendung aufrufen, um die Sprachnachricht abhören zu können. Alternativ können dem Nutzer beim Auswählen einer Multimedia-Sprachnachricht Optionen zur Behandlung der Multimedia-Sprachnachricht angezeigt werden. Dies können beispielsweise die Optionen Abspielen, Löschen, Kopieren, Verschieben, Anrufer anrufen, Beantworten und/oder Weiterleiten sein.

Gemäß einem weiteren Aspekt betrifft die Erfindung eine Verwaltungseinheit für ein mobiles Endgerät zur Handhabung von Multimedia-Nachrichten, die mit zumindest einer Empfangseinheit des mobilen Endgerätes zum Empfang von Multimedia-Nachrichten verbunden ist. Die Verwaltungseinheit ist dadurch gekennzeichnet, dass sie die Merkmale des unabhängigen Patentanspruchs 8 aufweist.

Die Verwaltungseinheit ist vorzugsweise so in dem mobilen Endgerät implementiert, dass diese beim Anschalten des mobilen Endgerätes aktiviert wird. Hierdurch steht die Verwaltungseinheit stets zur Verfügung und Multimedia-Sprachnachrichten können beispielsweise mittels einer Push-Anwendung an das mobile Endgerät geleitet werden. Bei einer Verwaltungseinheit, die manuell von dem Nutzer des mobilen Endgerätes gestartet werden muss ist diese Art der Übermittlung von Multimedia-Sprachnachricht nicht möglich.

Die Überprüfungseinheit ist in der Verwaltungseinheit integriert. Dies weist den Vorteil auf, dass die Überprüfungskriterien gegebenenfalls an die Bedürfnisse des Nutzers oder die Kapazitäten und Einstellungen der Verwaltungseinheit angepasst werden können.

Vorzugsweise weist die Verwaltungseinheit eine Schnittstelle zu einer Anzeigeeinheit des mobilen Endgerätes auf. Durch diese Schnittstelle wird es möglich Informationen zu einer Multimedia-Sprachnachricht zusammen mit weiteren Informationen weiterer Einheiten des mobilen Endgerätes anzuzeigen. Beispielsweise ist es möglich die Informationen zu den Multimedia-Sprachnachricht zusammen mit Informationen zu anderen Nachrichten, wie SMS- oder Email-Nachrichten in einem Eingangsordner anzuzeigen. Die Informationen zu den Multimedia-Sprachnachricht können aber auch in einem getrennten Eingangsordner angezeigt werden. Zusätzlich oder alternativ können Informationen zu einer Multimedia-Sprachnachricht oder eine Nachricht über den Empfang einer neuen Multimedia-Sprachnachricht an dem mobilen Endgerät gesondert angezeigt werden. Hierdurch kann der Nutzer stets über den Eingang informiert werden. Die Verwaltungseinheit weist vorzugsweise eine Auswahleinheit oder eine Schnittstelle zu einer Auswahleinheit auf. Über diese Auswahleinheit, die beispielsweise Tasten des mobilen Endgerätes oder so genannte Soft-Keys, die auf einem Display des mobilen Endgerätes angezeigt werden, sein können, kann der Nutzer Multimedia-Sprachnachrichten abhören, den Anrufer, der die Nachricht ursprünglich hinterlassen hatte, anrufen, die Multimedia-Sprachnachricht löschen, auf die Multimedia-Sprachnachricht antworten, diese weiterleiten und/oder die Multimedia-Sprachnachricht in einen anderen Ordner verschieben oder kopieren.

Da zum Abspielen der Multimedia-Sprachnachricht eine Abspieleinheit der Verwaltungseinheit verwendet wird, muss auf bereits in dem mobilen Endgerät vorgesehene andere Abspieleinheiten nicht zurückgegriffen werden, die in der Regel nur rudimentär ausgestattet sind. Die erfindungsgemäße Verwaltungseinheit und Abspieleinheit kann beispielsweise auf einem Symbian Betriebssystem basiert sein.

Gemäß einer bevorzugten Ausführungsform weist die Abspieleinheit mindestens ein Lautstärkeregelmodul, ein Wiedergabesteuerungsmodul und/oder ein Ausgabeauswahlmodul auf. Über das Lautstärkeregelmodul kann die Ausgabe der Multimedia-Sprachnachricht an dem mobilen Endgerät entsprechend den Wünschen des Nutzers lauter oder leiser erfolgen. Gemäß einer Ausführungsform kann in dem Lautstärkeregelmodul ein Speicher vorgesehen sein oder dieses mit einem Speicher verbunden sein, in dem die zuletzt von dem Nutzer gewählte Einstellung gespeichert und für ein späteres Abspielen der Nachricht wieder verwendet werden kann. Dies ist besonders vorteilhaft, da die Sprachqualität und Aufnahmelautstärke von Multimedia-Sprachnachricht zu Multimedia-Sprachnachricht erheblich variieren kann. Mittels des Wiedergabesteuerungsmodul kann innerhalb einer Multimedia-Sprachnachricht weiter nach vorne oder zurückgegangen werden. Der Speicher, in dem die von dem Nutzer gewählte Einstellung gespeichert wird, kann die Speichereinheit sein, in der auch die Multimedia-Sprachnachricht gespeichert sind. Das Ausgabeauswahlmodul bietet schließlich die Möglichkeit die für die Ausgabe der Multimedia-Sprachnachricht verwendete Ausgabevorrichtung auszuwählen. So kann die Multimedia-Sprachnachricht beispielsweise über einen internen oder externen Lautsprecher ausgegeben werden. Auch diese Einstellung kann in einem Speicher gespeichert und bei anschließenden Ausgaben verwendet oder entsprechend einem Nutzerprofil ausgewählt werden.

Vorzugsweise weist die Verwaltungseinheit eine Schnittstelle zu einer Weiterleitungseinheit und/oder eine Organisationseinheit des mobilen Endgerätes aufweist. Die Weiterleitungseinheit stellt beispielsweise eine auf dem mobilen Endgerät vorgesehenes Email-Anwendung oder Messaging-Anwendung dar. Die Organisationseinheit kann beispielsweise eine Kontakt-Anwendung, wie ein Adressbuch, sein.

Die erfindungsgemäße Verwaltungseinheit ist vorzugsweise für die Verwendung in dem erfindungsgemäßen Verfahren ausgelegt ist.

Die Einheiten, Einrichtungen und Funktionalitäten, die im Rahmen der vorliegenden Erfindung beschrieben werden, können zumindest teilweise als Software, insbesondere Anwendung, realisiert sein. Zumindest teilweise sind die Einheiten, Einrichtungen und/oder Funktionalitäten zusammengefasst.

Vorteile und Merkmale, die bezüglich des erfindungsgemäßen Verfahrens beschrieben werden gelten - soweit anwendbar - entsprechend für die erfindungsgemäße Verwaltungseinheit.

Die Erfindung wird im Folgenden anhand der beiliegenden Figuren erneut erläutert. Es zeigen:
Figur 1: eine schematische Darstellung eines Systems zur Verwendung des erfindungsgemäßen Verfahrens; und
Figur 2: eine schematische Blockdarstellung eines mobilen Endgerätes mit einer erfindungsgemäßen Verwaltungseinheit.

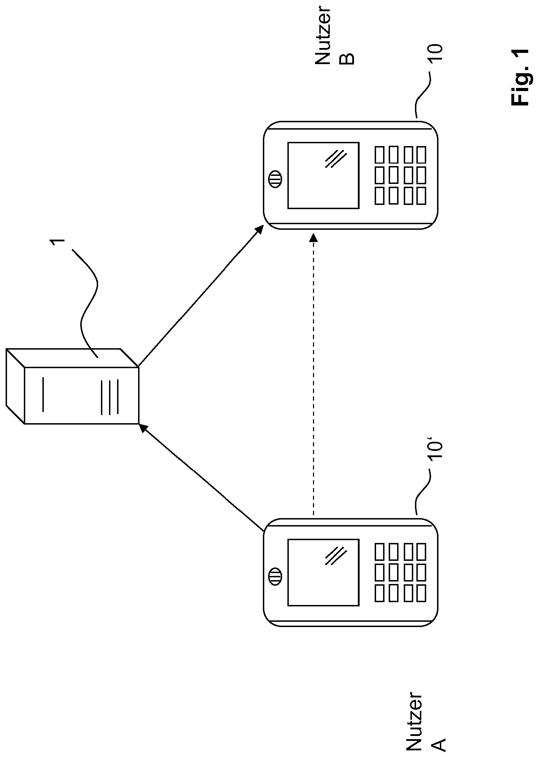

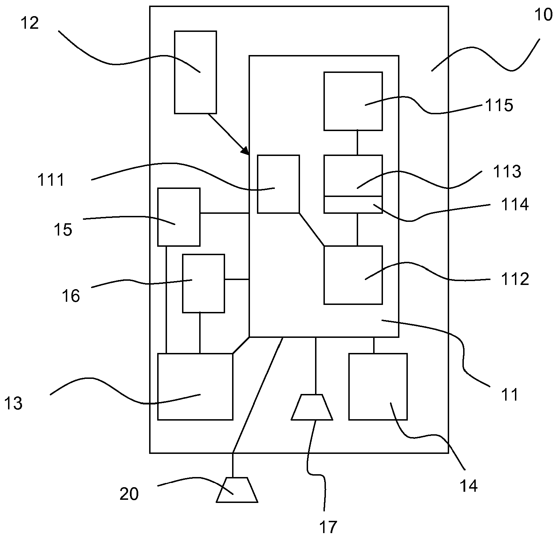

In Figur 1 ist ein erstes mobiles Endgerät 10' eines ersten Nutzers A in Form eines Mobiletelefons und ein zweites mobiles Endgerät 10 eines zweiten Nutzers B ebenfalls in Form eines Mobiltelefons gezeigt. Aus Gründen der besseren Verständlichkeit wird Nutzer A im Folgenden auch als Anrufer und Nutzer B als Angerufener bezeichnet. Es versteht sich allerdings, dass der Anruf auch von dem mobilen Endgerät 10 des Nutzers B oder einem weiteren Nutzer ausgehen kann und Nutzer A der Angerufene sein kann.

Nutzer A versucht Nutzer B anzurufen. Kann die Verbindung nicht hergestellt werden, weil beispielsweise Nutzer B nicht verfügbar ist, so wird der Anruf auf einen Dienste-Server des mobilen Kommunikationsnetzwerkes zu dem das mobile Endgerät 10 des Nutzers B gehört, umgeleitet. Auf dem Dienste-Server wird die Nachricht des Anrufers aufgenommen. Diese Nachricht wird anschließend oder während der Aufnahme in ein Multimedia-Nachricht-Format gebracht. Die so erzeugte Multimedia-Sprachnachricht wird anschließend an das mobile Endgerät 10 des Nutzers B übermittelt. Diese Übermittlung kann über ein Push-Verfahren erfolgen, bei dem die Übermittlung von dem Dienste-Server 1 aus initialisiert wird.

Alternativ kann in dem Fall, in dem eine Verbindung von dem mobilen Endgerät 10' des Anrufers zu dem mobilen Endgerät 10 von Nutzer B nicht hergestellt werden kann, an dem mobilen Endgerät 10' eine Sprachnachricht in einem Multimedia-Nachrichtenformat aufgenommen oder in dieses gebracht werden. Diese Multimedia-Nachricht kann dann unmittelbar unter Verwendung des Multimedia-Nachricht-Dienstes MMS an das Endgerät 10 von Nutzer B übermittelt werden.

In Figur 2 ist ein möglicher Aufbau des mobilen Endgerätes 10 schematisch dargestellt. Das Endgerät 10' kann einen entsprechenden Aufbau aufweisen. Dies ist allerdings nicht zwingend erforderlich. Der Aufbau von mobilen Endgeräten, insbesondere von Mobiltelefonen ist hinreichend bekannt, so dass in der Figur 2 nur zu der Erfindung gehörige oder vorzugsweise für die Erfindung zu verwendenden Bestandteile des mobilen Endgerätes 10 gezeigt sind.

In der in Figur 2 gezeigten Ausführungsform weist das mobile Endgerät 10 eine Verwaltungseinheit 11 auf. In dieser sind eine Überprüfungseinheit 111, sowie eine Speichereinheit 112 vorgesehen. Weiterhin umfasst die Verwaltungseinheit 11 eine Abspieleinheit 113, die im Folgenden auch als Player bezeichnet wird. In der dargestellten Ausführungsform ist der Player 113 mit einer Aufnahmeeinheit 114 verbunden. Die Aufnahmeeinheit 114 kann auch in dem Player 13 integriert sein. Schließlich weist die Verwaltungseinheit 11 eine Manipulationseinheit 115 auf, über die Funktionen des Players 113 und/oder der Aufnahmeeinheit 114 manipuliert beziehungsweise eingestellt werden können. Weiterhin ist in dem mobilen Endgerät 10 eine Empfangseinheit 12 vorgesehen. Diese kann zusätzlich auch als Übermittlungseinheit ausgestaltet sein. Die Anzeige von Daten und Informationen erfolgt bei dem mobilen Endgerät 10 mittels einer Anzeigeeinheit 13, die das Display des Mobiltelefons darstellen kann oder mit diesem verbunden sein kann. Zur Weiterleitung von Nachrichten und anderen Daten ist in dem mobilen Endgerät 10 eine Weiterleitungseinheit 14 vorgesehen, die beispielsweise eine Email-Anwendung darstellen kann. Die akustische Ausgabe kann bei dem gezeigten mobilen Endgerät 10 wahlweise über einen internen Lautsprecher 17 oder einen externen Lautsprecher 20 erfolgen. Die Auswahl eines an der Anzeigeeinheit 13 angezeigten Objektes, beispielsweise einer Nachricht, kann mittels der Auswahleinheit 16 erfolgen. Schließlich ist in dem mobilen Endgerät 10 eine Organisationseinheit 15, die beispielsweise ein Adressbuch oder andere Kontaktsammlung sein kann, vorgesehen.

Die in der Figur 2 gezeigten Verbindungen stellen lediglich eine mögliche Ausführungsform dar. Es ist erfindungsgemäß aber auch möglich, dass die einzelnen Einheiten des mobilen Endgerätes 10 und/oder der Verwaltungseinheit 11 auf andere Weise miteinander verbunden sind. Zudem können einzelne Einheiten des mobilen Endgerätes 10 und der Verwaltungseinheit 11 auch anders zugeordnet sein, als in der Figur 2 gezeigt. Beispielsweise kann die Überprüfungseinheit 111 eine zu der Verwaltungseinheit 11 separate Einheit darstellen.

Die Funktion des mobilen Endgerätes 10 beim Empfang einer Nachricht wird im Folgenden anhand eines Beispiels unter Bezugnahme auf Figur 2 beschrieben.

Wird eine Multimedia-Nachricht an der Empfangseinheit 12 erhalten, so wird diese an eine Überprüfungseinheit 111 übermittelt. In der Überprüfungseinheit 111 wird die Multimedia-Nachricht darauf hin überprüft, welchen Inhalt diese aufweist. Insbesondere wird überprüft, ob es sich bei der Multimedia-Nachricht um eine Multimedia-Sprachnachricht handelt. Diese Überprüfung erfolgt durch Ermittlung ob die Multimedia-Nachricht eine entsprechende Markierung aufweist, insbesondere einen Tag, einen Flag oder einen Eintrag in dem Nachrichten-Header aufweist, der die Nachricht als Multimedia-Sprachnachricht identifiziert. Besonders bevorzugt werden bei der Überprüfung Multimedia-Sprachnachricht erkannt, die eine Anrufbeantworternachricht enthalten beziehungsweise von einem Dienste-Server eines Anrufbeantworter-Dienstes stammen.

Sofern es sich bei der empfangenen Nachricht um eine solche Multimedia-Sprachnachricht handelt, wird diese an eine dafür vorgesehene Speichereinheit 112 weitergeleitet und dort abgelegt. In der dargestellten Ausführungsform ist die Speichereinheit 112 als reine Speichereinheit 112 für Multimedia-Sprachnachrichten ausgelegt. Alternativ ist es aber beispielsweise auch möglich, dass die Speichereinheit auch für weitere Nachrichten, wie Text-Nachrichten und Emails dient. In diesem Fall wird die empfangene Multimedia-Sprachnachricht in der Speichereinheit vorzugsweise in einem separaten Bereich oder Ordner abgelegt oder zumindest als Multimedia-Sprachnachricht gekennzeichnet.

Während der Übermittlung an die Speichereinheit 112 oder nach dem Ablegen in der Speichereinheit 112 kann dem Nutzer des mobilen Endgerätes 10 der Erhalt einer Multimedia-Sprachnachricht über die Anzeigeeinheit 13 angezeigt werden. Beispielsweise kann eine Nachricht "Sie haben eine neue MMS" in einem Pop-up-Fenster angezeigt werden. Zusätzlich können hierbei noch weitere Informationen, wie beispielsweise der Absender beziehungsweise ursprüngliche Hersteller der Multimedia-Sprachnachricht, das heißt Anrufer, angezeigt werden. Diese unmittelbare Anzeige einer neu eingegangenen Multimedia-Sprachnachricht ist nicht erforderlich. Allerdings wird dem Nutzer des mobilen Endgerätes 10 die neue Multimedia-Sprachnachricht angezeigt, wenn dieser ein entsprechendes Verzeichnis öffnet. Das Verzeichnis kann wahlweise ausschließlich die Einträge beziehungsweise Nachrichten anzeigen, die in der Speichereinheit 112 für Multimedia-Sprachnachricht gespeichert sind. Es ist aber auch möglich zusätzlich weitere Nachrichten, wie Emails, anzuzeigen. Im letzteren Fall wird die Multimedia-Sprachnachricht als solche gekennzeichnet beziehungsweise hervorgehoben.

Bei der Anzeige der Multimedia-Sprachnachricht werden vorzugsweise Informationen zu der Multimedia-Sprachnachricht angezeigt. Diese Informationen können das Datum und den Zeitpunkt der Aufnahme der Multimedia-Sprachnachricht, deren Größe - vorzugsweise ausgedrückt in der Wiedergabedauer - und/oder der Absender beziehungsweise ursprünglicher Hersteller, insbesondere der Anrufer, sein. Zur Anzeige der letztgenannten Information, wird aus der Multimedia-Sprachnachricht die Rufnummer des Anrufers ausgelesen. Bei Multimedia-Sprachnachricht, die auf einem Dienste-Server 1 erstellt wurden, wird daher die Rufnummer des Anrufers in die Multimedia-Sprachnachricht, beispielsweise in den Header der Nachricht aufgenommen. Die ausgelesene Rufnummer wird mit Einträgen der Organisationseinheit 15, insbesondere des Adressbuches oder der Kontaktliste, abgeglichen und so der Name des Anrufers ermittelt. Dieser Name kann dann mit den weiteren Informationen an der Anzeigeeinheit 13 angezeigt werden.

Wählt der Nutzer des mobilen Endgerätes 10 über die Auswahleinheit 16 eine der angezeigten Multimedia-Sprachnachricht aus, so wird der Player 113 gestartet und die Multimedia-Sprachnachricht über diesen abgespielt. Es ist allerdings auch möglich, dass der Player 113 beim Einschalten des mobilen Endgerätes 10 automatisch gestartet wird und die Multimedia-Sprachnachricht somit automatisch abgespielt werden kann. In jedem Fall ist es allerdings nicht erforderlich, das der Nutzer des mobilen Endgerätes 10 den Player 113 manuell startet. Während des Abspielens wird der Sprachinhalt der Multimedia-Sprachnachricht in der Regel über den internen Lautsprecher 17 ausgegeben.

Mittels der Manipulationseinheit 115 kann der Nutzer die Wiedergabe der Multimedia-Sprachnachricht beeinflussen. Über die Tasten des Telefons, über so genannte Soft-Keys oder andere Eingabevorrichtungen - einschließlich Spracheingabe - kann der Nutzer beispielsweise die Lautstärke der an dem Lautsprecher 17 ausgegebenen Sprachnachricht ändern. Hierbei wird die von dem Nutzer gewählte Lautstärkeneinstellung vorzugsweise in Zusammenhang mit der Multimedia-Sprachnachricht, die wiedergegeben wird gespeichert. Auf diese Weise wird bei einem erneuten Anhören der Nachricht automatisch die von dem Nutzer zuvor gewählte Lautstärke an dem Player 113 eingestellt. Die Lautstärkeneinstellung für eine Multimedia-Sprachnachricht wird beispielsweise in der Speichereinheit 112 gespeichert, in der auch die Multimedia-Sprachnachrichten abgelegt sind. Alternativ kann ein zusätzlicher Speicher für die Einstellungen des Players 13 vorgesehen sein. Über die Manipulationseinheit 115 kann der Nutzer weiterhin den für die Ausgabe der Sprachnachricht gewünschten Lautsprecher 17, 20 auswählen. Vor oder während der Ausgabe der Sprachnachricht kann der Nutzer zwischen diesen Lautsprechern 17, 20 hin und her schalten. Auch dies kann über die Tasten des Telefons, über so genannte Soft-Keys oder andere Eingabevorrichtungen - einschließlich Spracheingabe - erfolgen. Die von dem Nutzer bevorzugte Einstellung bezüglich des zu wählenden Lautsprechers 17, 20 kann als Teil eines Nutzerprofils in der Verwaltungseinheit 11 hinterlegt sein.

Über die Manipulationseinheit 115 kann weiterhin die Wiedergabe der Sprachnachricht beeinflusst werden, indem in der Sprachnachricht während der Wiedergabe oder in einem angehaltenen Zustand der Wiedergabe nach vorne oder zurückgesprungen werden kann. Auch zwischen unterschiedlichen Multimedia-Sprachnachricht kann mittels der Manipulationseinheit 115 oder der Auswahleinheit 16 hin und her geschaltet werden. Schließlich kann die Wiedergabe der Sprachnachricht auch von der Manipulationseinheit 115 gestartet, gestoppt und angehalten werden.

Wie in der Figur 2 gezeigt, kann die Multimedia-Sprachnachricht auch für Anwendungen zur Verfügung gestellt werden, die auf einem anderen Gerät vorgesehen sind. Hierzu wird die Multimedia-Sprachnachricht mittels der Weiterleitungseinheit 14 an das entsprechende Gerät oder den entsprechenden Nutzer eines anderen Gerätes weitergeleitet. Die Weiterleitung kann aufgrund des Formates der in der Speichereinheit 112 abgelegten Sprachnachricht als Multimedia-Sprachnachricht ohne vorherige Bearbeitung erfolgen. In Abhängigkeit von der Anwendung, die für die Weiterleitung verwendet werden soll, kann die Multimedia-Sprachnachricht aber auch vor der Weiterleitung bearbeitet und in ein erforderliches Format gebracht werden.

Vorzugsweise wird die Weiterleitung der Multimedia-Sprachnachricht unmittelbar aus der Anzeige der Multimedia-Sprachnachricht veranlasst. Wird eine Liste von Multimedia-Sprachnachrichten, die in der Speichereinheit 112 gespeichert sind, angezeigt, kann der Nutzer die zur Weiterleitung vorgesehene Multimedia-Sprachnachricht mittels der Auswahleinheit 116 oder einer anderen Einheit auswählen. Besonders bevorzugt werden dem Nutzer dabei die Optionen angezeigt, die für die Multimedia-Sprachnachricht zur Verfügung stehen. So können Optionen, wie Abspielen, Löschen, Kopieren, Verschieben, Anrufer anrufen, Beantworten und/oder Weiterleiten angezeigt werden. Für die Option Weiterleiten können zusätzlich die auf dem mobilen Endgerät 10 zur Verfügung stehenden Anwendungen zum Weiterleiten angezeigt und von dem Nutzer ausgewählt werden.

Bei der Anzeige der in der Speichereinheit 112 abgelegten Multimedia-Sprachnachricht können zusätzlich zu den bereits erwähnten Informationen zu der Multimedia-Sprachnachricht auch Angaben zu dem Status der Multimedia-Sprachnachricht oder zu dem Status des Absenders beziehungsweise Anrufers angezeigt werden.

Als Status der Multimedia-Sprachnachricht können beispielsweise Zustände, wie Neu, Abgehört, Weitergeleitet beantwortet und dergleichen angegeben werden. Diese Statusinformationen sind in der Speichereinheit 112 zusammen mit der entsprechenden Multimedia-Sprachnachricht gespeichert und werden bei Bearbeitung der Multimedia-Sprachnachricht, zum Beispiel beim Weiterleiten, aktualisiert. Der Status des Anrufers oder Absenders der Multimedia-Sprachnachricht ist insbesondere der Status, ob die Person "online" ist. Dies bedeutet, ob die Person über Kommunikationswege, die eine bestehende Verbindung erfordern, wie beispielsweise das Versenden einer Sofortnachricht, erreichbar ist. Diese Statusinformation kann über Anwendungen zur Verfügung gestellt werden, die diese Kommunikationswege verwendet.

Mittels der in der Figur 2 gezeigten Aufnahmeeinrichtung 114 kann auf dem mobilen Endgerät 10 eine Sprachnachricht aufgenommen werden. Diese wird in der Aufnahmevorrichtung 114 entweder unmittelbar in dem Multimedia-Sprachnachrichtformat zum Übermitteln über Multimedia-Nachricht-Dienste (MMS) aufgenommen oder in dieses Format konvertiert.

Obwohl die Erfindung im Wesentlichen unter Bezugnahme auf reine Sprachnachrichten beschrieben wird, kann die Multimedia-Sprachnachricht auch einen Videoanteil aufweisen oder eine reine Videonachricht darstellen.

Merkmale, die in dem in den Figuren gezeigten Ausführungsbeispielen realisiert sind, können auch einzeln realisiert sein. So kann in einer Ausführungsform beispielsweise die in Figur 2 gezeigten Ausführungsform realisiert sein, wobei eine Schnittstelle zu der Weiterleitungseinheit nicht vorgesehen ist.

### Bezugszeichenliste

- 1: Dienste-Server

- 10: mobiles Endgerät

- 11: Verwaltungseinheit / Client
- 111: Überprüfungseinheit
- 112: Speichereinheit / Ablageordner
- 113: Player / Abspieleinheit
- 114: Aufnahmeeinheit
- 115: Manipulationseinheit

- 12: Empfangseinheit
- 13: Anzeigeeinheit
- 14: Email-Anwendung / Weiterleitungseinheit
- 15: Adressbuch
- 16: Auswahleinheit
- 17: Interner Lautsprecher

- 20: Externer Lautsprecher

## Patentansprüche

1. Verfahren zur Handhabung von Multimedia-Nachrichten auf einem mobilen Endgerät (10) eines mobilen Kommunikationsnetzwerkes, **dadurch gekennzeichnet, dass** das mobile Endgerät (10) nach Empfang einer Multimedia-Nachricht diese Multimedia-Nachricht in einer Überprüfungseinheit (111) einer Verwaltungseinheit (11) des mobilen Endgeräts (10) bezüglich ihres Inhalts und/oder ihrer Herkunft daraufhin überprüft, ob es sich bei der Multimedia-Nachricht um eine Multimedia-Sprachnachricht handelt, dass bei Erkennen einer Multimedia-Sprachnachricht die Multimedia-Nachricht einer Speichereinheit (112), die der Verwaltungseinheit (11) zugeordnet ist, zugeführt und dort abgelegt wird, wobei die Speichereinheit (112) als Speichereinheit zum ausschließlichen Speichern von Multimedia-Sprachnachrichten ausgelegt ist, oder wobei in der Speichereinheit eine Unterteilung vorgesehen ist, die ausschließlich zum Speichern von Multimedia-Sprachnachrichten verwendet wird, dass Multimedia-Nachrichten, die nicht als Multimedia-Sprechnachricht erkannt werden, nach der Überprüfung weiteren Einheiten des mobilen Endgeräts zur entsprechenden Bearbeitung zugeleitet werden, dass in der Verwaltungseinheit (11) eine Abspieleinheit (113) vorgesehen ist, die zum Abspielen von Multimedia-Sprachnachrichten ausgelegt ist, und dass die Abspieleinheit (113) bei Auswählen einer Multimedia-Sprachnachricht in der Speichereinheit (112) aktiviert wird, oder dass bei Aktivierung der Abspieleinheit (113) die Multimedia-Sprachnachricht aufgerufen und abgespielt wird.

2. Verfahren nach Anspruch 1, **dadurch gekennzeichnet, dass** die Multimedia-Sprachnachricht über die Verwaltungseinheit (11) einer Weiterleitungseinheit (14) des mobilen Endgerätes (10) zur Verfügung gestellt wird.

3. Verfahren nach einem der Ansprüche 1 oder 2, **dadurch gekennzeichnet, dass** die Multimedia-Nachricht durch einen Push-Mechanismus an dem mobilen Endgerät (10) empfangen wird.

4. Verfahren nach einem der Ansprüche 1 bis 3, **dadurch gekennzeichnet, dass** das Erkennen einer Multimedia-Sprachnachricht durch Überprüfen des Vorliegens einer Markierung in der empfangenen Multimedia-Nachricht erfolgt.

5. Verfahren nach einem der Ansprüche 1 bis 4, **dadurch gekennzeichnet, dass** Informationen zu der Multimedia-Sprachnachricht an dem mobilen Endgerät (10) angezeigt werden, wobei die Informationen zu der Multimedia-Sprachnachricht nach dem Empfang der Multimedia-Nachricht geändert werden.

6. Verfahren nach Anspruch 5, **dadurch gekennzeichnet, dass** die Informationen Statusinformationen der Multimedia-Sprachnachricht und/oder Angaben zu dem Absender oder Hersteller der Multimedia-Sprachnachricht enthalten.

7. Verfahren nach einem der Ansprüche 1 bis 6, **dadurch gekennzeichnet, dass** die empfangene Multimedia-Sprachnachricht beim Auswählen der Nachricht durch den Nutzer des mobilen Endgerätes (10) unmittelbar für die Abspieleinheit (113) der Verwaltungseinheit (11) zur Verfügung gestellt wird.

8. Verwaltungseinheit für ein mobiles Endgerät (10) zur Handhabung von Multimedia-Nachrichten, die mit zumindest einer Empfangseinheit (12) des mobilen Endgerätes (10) zum Empfang von Multimedia-Nachrichten verbunden ist, **dadurch gekennzeichnet, dass** die Verwaltungseinheit (11) in dem mobilen Endgerät (10) implementiert ist, dass in der Verwaltungseinheit (11) eine Überprüfungseinheit (111) zum Überprüfen des Inhalts und/oder der Herkunft der Multimedia-Nachricht und zum Erkennen einer Multimedia-Sprachnachricht integriert ist, dass der Verwaltungseinheit (11) zumindest eine Speichereinheit (112) zum Speichern der Multimedia-Sprachnachricht zugeordnet ist wobei die Speichereinheit (112) als Speichereinheit zum ausschließlichen Speichern von Multimedia-Sprachnachrichten ausgelegt ist, oder wobei in der Speichereinheit eine Unterteilung vorgesehen ist, die ausschließlich zum Speichern von Multimedia-Sprachnachrichten verwendet wird, dass die Verwaltungseinheit (11) eingerichtet ist, dass Multimedia-Nachrichten, die nicht als Multimedia-Sprechnachricht erkannt werden, nach der Überprüfung weiteren Einheiten des mobilen Endgeräts zur entsprechenden Bearbeitung zugeleitet werden, und dass die Verwaltungseinheit (11) eine Abspieleinheit (113) aufweist, die zum Abspielen von Multimedia-Sprachnachrichten aus der Speichereinheit (112) ausgelegt ist, derart, dass die Abspieleinheit (113) bei Auswählen einer Multimedia-Sprachnachricht in der Speichereinheit (112) aktiviert wird, oder dass bei Aktivierung der Abspieleinheit (113) die Multimedia-Sprachnachricht aufgerufen und abgespielt wird

9. Verwaltungseinheit nach Anspruch 8, **dadurch gekennzeichnet, dass** die Verwaltungseinheit (11) eine Schnittstelle zu einer Anzeigeeinheit (13) des mobilen Endgerätes (10) aufweist.

10. Verwaltungseinheit nach einem der Ansprüche 8 oder 9, **dadurch gekennzeichnet, dass** die Abspieleinheit (113) mindestens ein Lautstärkeregelmodul, ein Wiedergabesteuerungsmodul und/oder ein Ausgabeauswahlmodul aufweist.

11. Verwaltungseinheit nach einem der Ansprüche 8 bis 10, **dadurch gekennzeichnet, dass** die Verwaltungseinheit (11) eine Schnittstelle zu einer Weiterleitungseinheit (14) und/oder eine Organisationseinheit (15) des mobilen Endgerätes (10) aufweist.

12. Verwaltungseinheit nach einem der Ansprüche 8 bis 11, **dadurch gekennzeichnet, dass** die Verwaltungseinheit (11) für die Verwendung in dem Verfahren gemäß einem der Ansprüche 1 bis 7 ausgelegt ist.

## Claims

1. Method for handling multimedia messages on a mobile terminal (10) of a mobile communications network, **characterized in that** the mobile terminal (10), upon receipt of a multimedia message, checks this multimedia message in a checking unit (111) of a management unit (11) of the mobile terminal (10) with regard to its content and/or to its origin, whether the multimedia message is a multimedia voice message, **in that**, upon recognizing a multimedia voice message, the multimedia message is directed to a storage unit (112), which is assigned to the management unit (11), and gets stored therein, wherein the storage unit (112) is provided as a storage unit for the exclusive storage of multimedia voice messages, or wherein a subdivision is provided in the storage unit, which is exclusively used for storing multimedia voice messages, **in that** multimedia messages, which are not recognized as a multimedia voice message, after checking get directed to further units of the mobile terminal for appropriate processing, **in that** the management unit (11) comprises a playback unit (113), which is provided for playing multimedia voice messages, and **in that** the playback unit (113) is activated when a multimedia voice message is selected from the storage unit (112), or that the multimedia voice message gets called up and played, when the playback unit (113) gets activated.

2. Method according to Claim 1, **characterized in that** the multimedia voice message is made available to a forwarding unit (14) of the mobile terminal (10) via the management unit (11).

3. Method according to anyone of Claims 1 or 2, **characterized in that** the multimedia message is received on the mobile terminal (10) by a push mechanism.

4. Method according to anyone of Claims 1 to 3, **characterized in that** a multimedia voice message is recognized by checking the presence of a marker in the received multimedia message.

5. Method according to anyone of Claims 1 to 4, **characterized in that** information about the multimedia voice message is displayed on the mobile terminal (10), the information about the multimedia voice message being changed after the multimedia message has been received.

6. Method according to Claim 5, **characterized in that** the information contains status information on the multimedia voice message and/or information on the sender or manufacturer of the multimedia voice message.

7. Method according to one of Claims 1 to 6, **characterized in that** the received multimedia voice message is made available immediately for the playback unit (113) of the management unit (11) when the user of the mobile terminal (10) selects the message.

8. Management unit for a mobile terminal (10) for handling multimedia messages, which is connected to at least one receiving unit (12) of the mobile terminal (10) for receiving multimedia messages, **characterized in that** the management unit (11) is implemented in the mobile terminal (10), that a checking unit (111) for checking the content and/or the origin of the multimedia message and for recognizing a multimedia voice message is integrated in the management unit (11), that at least one storage unit (112) for storing the multimedia voice message is assigned to the management unit (11), wherein the storage unit (112) is provided as a storage unit for the exclusive storage of multimedia voice messages, or wherein a subdivision is provided in the storage unit, which is exclusively used for storing multimedia voice messages, that the management unit (11) is provided, that multimedia messages, which are not recognized as a multimedia voice message, after checking get directed to further units of the mobile terminal for appropriate processing, and that the management unit (11) comprises a playback unit (113), which is provided for playing multimedia voice messages from the storage unit (112) such, that the playback unit (113) is activated when a multimedia voice message is selected from the storage unit (112), or that the multimedia voice message gets called up and played, when the playback unit (113) gets activated.

9. Management unit according to Claim 8, **characterized in that** the management unit (11) comprises an interface to a display unit (13) of the mobile terminal device (10).

10. Management unit according to anyone of Claims 8 or 9, **characterized in that** the playback unit (113) comprises at least one volume control module, one playback control module and/or one output selection module.

11. Management unit according to anyone of Claims 8 to 10, **characterized in that** the management unit (11) comprises an interface to a forwarding unit (14) and/or to an organizational unit (15) of the mobile terminal (10).

12. Management unit according to anyone of Claims 8 to 11, **characterized in that** the management unit (11) is designed for use in the method according to anyone of Claims 1 to 7.

## Revendications

1. Procédé pour la manipulation de messages multimédias sur un terminal mobile (10) d'un réseau de communication mobile, **caractérisé en ce que** le terminal mobile (10) après réception d'un message multimédia vérifie ce message multimédia dans une unité de vérification (111) d'une unité de gestion (11) du terminal mobile (111) en ce qui concerne son contenu et/ou son origine pour établir si le message multimédia est un message vocal multimédia, **en ce que** lors de la reconnaissance d'un message vocal multimédia le message multimédia est amené vers une unité de stockage (112), qui est associée à l'unité de gestion (11), et y est déposé, dans lequel l'unité de stockage (112) est conçue en tant qu'unité de stockage pour le stockage exclusif de messages vocaux multimédias ou dans lequel une subdivision est prévue dans l'unité de stockage, laquelle subdivision est utilisée exclusivement pour le stockage de messages vocaux multimédias, **en ce que** des messages multimédias qui ne sont pas reconnus en tant que message vocal multimédia sont transmis pour un traitement corespondant après la vérification d'autres unités du terminal mobile, **en ce que** dans l'unité de gestion (11) est prévue une unité de lecture (113) qui est conçue pour la lecture de messages vocaux multimédias et **en ce que** l'unité de lecture (113) est activée lors de la sélection d'un message vocal multimédia dans l'unité de stockage (112) ou **en ce que** lors de l'activation de l'unité de lecture (113) le message vocal multimédia est appelé et lu.

2. Procédé selon la revendication 1, **caractérisé en ce que** le message vocal multimédia est mis à disposition d'une unité de redirection (14) du terminal mobile (10) par le biais de l'unité de gestion (11).

3. Procédé selon l'une quelconque des revendications 1 ou 2, **caractérisé en ce que** le message multimédia est reçu par l'intermédiaire d'un mécanisme de poussée au niveau du terminal mobile (10).

4. Procédé selon l'une quelconque des revendications 1 à 3, **caractérisé en ce que** la reconnaissance d'un message vocal multimédia s'effectue par l'intermédiaire d'une vérification de la présence d'un marquage dans le message multimédia reçu.

5. Procédé selon l'une quelconque des revendications 1 à 4, **caractérisé en ce que** des informations concernant le message vocal multimédia sont affichées au niveau du terminal mobile (10), dans lequel les informations concernant le message vocal multimédia sont modifiées après la réception du message vocal multimédia.

6. Procédé selon la revendication 5, **caractérisé en ce que** les informations contiennent des informations de statut du message vocal multimédia et/ou des indications concernant l'expéditeur ou le producteur du message vocal multimédia.

7. Procédé selon l'une quelconque des revendications 1 à 6, **caractérisé en ce que** le message vocal multimédia reçu est mis à disposition de l'unité de gestion (11) lors de la sélection du message par l'intermédiaire de l'utilisateur du terminal mobile (10) directement pour l'unité de lecture (113).

8. Unité de gestion pour un terminal mobile (10) pour la manipulation de messages multimédias qui est reliée à au moins une unité de réception (12) du terminal mobile (10) pour la réception de messages multimédias, **caractérisée en ce que** l'unité de gestion (11) est mise en oeuvre dans le terminal mobile (10), **en ce qu'**une unité de surveillance (111) pour la surveillance du contenu et/ou de l'origine du message multimédia et pour la reconnaissance d'un message vocal multimédia est intégrée dans l'unité de gestion (11), **en ce qu'**au moins une unité de stockage (112) pour le stockage du message vocal multimédia est associée à l'unité de gestion (11), dans laquelle l'unité de stockage (112) est conçue en tant qu'unité de stockage pour le stockage exclusif de messages vocaux multimédias ou dans laquelle une subdivision est prévue dans l'unité de stockage, qui est utilisée exclusivement pour le stockage de messages vocaux multimédias, **en ce que** l'unité de gestion (11) est conçue **en ce que** des messages multimédias qui ne sont pas reconnus en tant que message vocal multiméda sont transmis pour un traitement correspondant après la vérification d'autres unités du terminal mobile et **en ce que** l'unité de gestion (11) présente une unité de lecture (113) qui est conçue pour la lecture de messages vocaux multimédias à partir de l'unité de stockage (112) de telle sorte que l'unité de lecture (113) est activée dans l'unité de stockage (112) lors de la sélection d'un message vocal multimédia ou **en ce que** le message vocal multimédia est appelé et lu lors de l'activation de l'unité de lecture (113).

9. Unité de gestion selon la revendication 8, **caractérisée en ce que** l'unité de gestion (11) présente une interface avec une unité d'affichage (13) du terminal mobile (10).

10. Unité de gestion selon l'une quelconque des revendications 8 ou 9, **caractérisée en ce que** l'unité de lecture (113) présente au moins un module de réglage de niveau sonore, un module de commande de rendu et/ou un module de sélection d'émission.

11. Unité de gestion selon l'une quelconque des revendications 8 à 10, **caractérisée en ce que** l'unité de gestion (11) présente une interface avec une unité de redirection (14) et/ou une unité d'organisation (15) du terminal mobile (10).

12. Unité de gestion selon l'une quelconque des revendications 8 à 11, **caractérisée en ce que** l'unité de gestion (11) est conçue pour l'utilisation dans le procédé selon l'une quelconque des revendications 1 à 7.
